# EUROPÄISCHE PATENTANMELDUNG

(11) **EP 2 907 610 A1**
(43) Veröffentlichungstag der Anmeldung: **19.08.2015**
(21) Anmeldenummer: 14001322.8
(22) Anmeldetag: 10.04.2014
(51) Int. Cl.: B23K 9/16, B23K 9/173, B23K 9/23, B23K 9/32, B23K 35/38

(54) **Schutzgas und Verfahren zum Metall-Schutzgasschweissen für die Schadstoffreduktion**

(30) Priorität: 18.02.2014 DE 102014002349
(71) Anmelder: Linde Aktiengesellschaft, 80331 München (DE)
(72) Erfinder: Miklos, Ernst, 85551 Kirchheim (DE); Savgu, Fatih, 85757 Karlsfeld (DE)
(74) Vertreter: Gellner, Bernd

(57) **Zusammenfassung**

Es wird ein Verfahren zum Metall-Schutzgasschweißen vorgeschlagen, bei dem ein Schweißzusatzwerkstoff (1) einem Schweißbrenner (10) zugeführt und über einen Schweißstromanschluss mit einem Schweißstrom einer Schweißstromquelle (30) beaufschlagt wird, wodurch ein Lichtbogen (7) ausgebildet und Material des Schweißzusatzwerkstoffs (1) in einem Schweißbereich auf ein zumindest in dem Schweißbereich aus einem legierten Edelstahl bestehendes Werkstück (20) übertragen wird. Mittels des Schweißbrenners (10) wird dem Schweißbereich ein Schutzgas zugeführt, das einen Gehalt von 0,5 bis 3,0 Volumenprozent wenigstens einer oxidierenden Komponente und einen Gehalt von 0,1 bis 2,9 Volumenprozent Wasserstoff enthält. Ein Verfahren zur Reduktion eines Gehalts an Nickeloxiden und Chrom(VI)-Verbindungen in einem Schweißrauch eines derartigen Schweißverfahrens, ein entsprechendes Schutzgas und die Verwendung eines Gasgemischs als Schutzgas sind ebenfalls Gegenstand der vorliegenden Erfindung.

## Beschreibung

Die Erfindung betrifft ein Schweißverfahren, ein Verfahren zur Reduktion von Nickeloxiden und/oder Chrom(VI)-Verbindungen in einem Schweißrauch eines derartigen Schweißverfahrens, ein Wasserstoff und zumindest eine oxidierende Komponente enthaltendes Schutzgas zur Verwendung in den genannten Verfahren sowie die Verwendung eines Wasserstoff und zumindest eine oxidierende Komponente enthaltenden Schutzgases in diesen Verfahren.

### Stand der Technik

Dem Fachmann sind aus dem Stand der Technik unterschiedliche Schweißverfahren bekannt, die sich jeweils für bestimmte schweißtechnische Aufgaben in besonderer Weise eignen. Eine Übersicht geben beispielsweise Dilthey, U.: "Schweißtechnische Fertigungsverfahren 1: Schweiß- und Schneidtechnologien", 3. Aufl. Heidelberg: Springer, 2006 bzw. Davies, A.C.: "The Science and Practice of Welding", 10. Aufl. Cambridge: Cambridge University Press, 1993.

Die vorliegende Erfindung betrifft ein Schweißverfahren, bei dem ein drahtförmiger Schweißzusatzwerkstoff eingesetzt und in einem Lichtbogen aufgeschmolzen wird, nämlich das Metall-Schutzgasschweißen (MSG, engl. Gas Metal Arc Welding, GMAW). Beim MSG-Schweißen wird dem Schweißbrenner eine Drahtelektrode, die damit auch gleichzeitig einen Schweißzusatzwerkstoff bildet, kontinuierlich zugeführt und in einem Lichtbogen abgeschmolzen. Zum Schutz des sich ausbildenden Schmelzbads und ggf. auch der erstarrenden Schweißnaht vor Oxidation wird ein geeignetes Schutzgas eingesetzt, das den Schweißbereich abdeckt. Je nach Art des Schutzgases unterscheidet der Fachmann dabei zwischen Metall-Inertgasschweißen (MIG, engl. Metal Inert Gas Welding) und Metall-Aktivgasschweißen (MAG, engl. Metal Active Gas Welding). Die grundlegenden Verfahrensprinzipien gleichen einander. Typischerweise werden einem MSG-Brenner der Schweißstrom, die Drahtelektrode, das Schutzgas und ggf. erforderliches Kühlwasser durch ein Schlauchpaket zugeführt. MSG-Verfahren erlauben eine hohe Schweißgeschwindigkeit und damit eine überlegene Produktivität im Vergleich zu Verfahren, in denen nicht abschmelzende Elektroden eingesetzt werden, beispielsweise dem Wolfram-Inertgasschweißen (WIG-Schweißen, engl. Tungsten Gas Welding, TIG). Die Automatisierbarkeit von MSG-Verfahren ist ausgesprochen hoch. Nachteilig an der Verwendung des direkt im Lichtbogen erhitzten, aufgeschmolzenen und dabei zum Teil verdampften Schweißzusatzwerkstoffs ist die deutlich erhöhte Emission von Partikeln und schädlichen Dämpfen, sogenanntem Schweißrauch, gegenüber Verfahren mit nicht abschmelzender Elektrode. Dies gilt insbesondere dann, wenn hochlegierte Werkstoffe wie Edel- oder Chromstähle geschweißt werden.

Im Schweißrauch sind insbesondere Chrom(VI)-Verbindungen und Nickeloxide problematisch, wie beispielsweise im Informationsblatt Nr. 036, "Chrom(VI)-Verbindungen bzw. Nickeloxide beim Schweißen und bei verwandten Verfahren: Schutzmaßnahmen am Arbeitsplatz", des Fachausschusses Metall- und Oberflächenbehandlung der Deutschen Gesetzlichen Unfallversicherung, Ausgabe 11/2008, oder dem entsprechenden Factsheet "Controlling Hazardous Fume and Gases during Welding" der Occupational Safety and Health Administration des U.S. Department of Labor, erläutert. Chrom(VI)-Verbindungen und Nickeloxide können eine krebserzeugende Wirkung auf den Menschen haben.

Chrom(VI)-Verbindungen bilden sich insbesondere bei MSG-Verfahren, bei denen mit Chrom hoch legierte Schweißzusatzwerkstoffe eingesetzt werden. Chrom(VI)-Verbindungen treten meistens in der Form von Chromaten wie z.B. Natriumchromat (Na₂CrO₄), Kaliumchromat (K₂CrO₄) oder Calciumchromat (CaCrO₄) oder auch in Form von Chromtrioxid (CrO₃) auf. Die erwähnten Nickeloxide (NiO, NiO₂, Ni₂O₃) entstehen vorwiegend beim Schweißen mit Nickel und Nickelbasislegierungen bzw. Nickelbasiswerkstoffen, insbesondere beim zuvor erläuterten MSG-Schweißen.

Zur Vermeidung der Exposition mit Chrom(VI)-Verbindungen und Nickeloxiden am Arbeitsplatz werden unter anderem der Einsatz von Scavengern wie Silanen, die Umstellung auf schadstoffärmere Verfahren (z.B. WIG-Schweißen), die Optimierung der Schweißparameter, günstige Arbeitspositionen, bei denen der Atembereich des Schweißers sich außerhalb der Rauchfahne befindet, eine wirksame Absaugung im Entstehungsbereich des Schweißrauchs und der Einsatz von persönlichen Schutzausrüstungen empfohlen. Diese Maßnahmen erschweren in der Praxis die Arbeit jedoch mitunter beträchtlich.

Aufgabe der vorliegenden Erfindung ist es daher, die Bildung von Nickeloxiden und/oder Chrom(VI)-Verbindungen beim MSG-Schweißen von Edelstahl zu reduzieren.

### Offenbarung der Erfindung

Diese Aufgabe wird durch ein Schweißverfahren, ein Verfahren zur Reduktion von Nickeloxiden und/oder Chrom(VI)-Verbindungen in einem Schweißrauch eines derartigen Schweißverfahrens, ein Wasserstoff und zumindest eine oxidierende Komponente enthaltendes Schutzgas für die genannten Verfahren, sowie die Verwendung eines Wasserstoff und zumindest eine oxidierende Komponente enthaltenden Schutzgases in diesen Verfahren gelöst, wie jeweils in den unabhängigen Patentansprüchen angegeben. Bevorzugte Ausführungsformen der Erfindung sind jeweils Gegenstand der abhängigen Patentansprüche sowie der nachfolgenden Beschreibung.

### Vorteile der Erfindung

Die Erfindung geht von einem Verfahren zum Metall-Schutzgasschweißen an sich bekannter Art aus, also von einem Verfahren, bei dem ein drahtförmiger Schweißzusatzwerkstoff einem Schweißbrenner zugeführt und über einen Schweißstromanschluss mit einem Schweißstrom einer Schweißstromquelle beaufschlagt wird. Hierdurch bildet sich ein Lichtbogen aus und Material des Schweißzusatzwerkstoffs wird in einem Schweißbereich auf ein Werkstück übertragen. Die Erfindung betrifft ein Verfahren, das zum Schweißen von legiertem Edelstahl eingesetzt wird. Das Werkstück besteht also zumindest in dem Schweißbereich aus legiertem Edelstahl und es wird ein entsprechender Schweißzusatzwerkstoff eingesetzt. Bei einem solchen Verfahren bilden sich herkömmlicherweise beträchtliche Mengen der zuvor genannten Verbindungen.

Unter "Edelstahl" wird gemäß EN 10020 ein legierter oder unlegierter Werkstoff mit besonderem Reinheitsgrad verstanden. Es handelt sich beispielsweise um Stähle, deren Schwefel- und Phosphorgehalt (sogenannte Eisenbegleiter) 0,025 % nicht überschreitet. Die im Rahmen der vorliegenden Erfindung bearbeiteten legierten Edelstähle enthalten Chrom als Legierungskomponente. Es handelt sich beispielsweise um die legierten Edelstähle mit den nachfolgend angegebenen Werkstoffnummern (WNr.) bzw. Bezeichnungen des AISI (American Iron and Steel Institute): WNr. 1.4003 (X2CrNi12); WNr. 1.4006 (X12Cr13), AISI 410; WNr. 1.4016 (X6Cr17), AISI 430; WNr. 1.4021 (X20Cr13), AISI 420; WNr. 1.4104 (X14CrMoS17, früher X12CrMoS17), AISI 430F; WNr. 1.4301 (X5CrNi18-10), AISI 304; WNr. 1.4305 (X8CrNiS18-9, früher X10CrNiS18-9), AISI 303; WNr. 1.4306 (X2CrNi19-11), AISI 304L; WNr. 1.4307 (X2CrNi18-9), AISI 304L; WNr. 1.4310 (X10CrNi18-8, früher X12 CrNi17-7), AISI 301; WNr. 1.4316 (X1CrNi19-9); WNr. 1.4401 (X5CrNiMo17-12-2) AISI 316; WNr. 1.4404 (X2CrNiMo17-12-2), AISI 316L; WNr. 1.4440 (X2CrNiMo19-12), AISI 316L; WNr. 1.4452 (X13CrMnMoN18-14-3), P2000; WNr. 1.4462 (X2CrNiMoN22-5-3); WNr. 1.4541 (X6CrNiTi18-10), AISI 321; WNr. 1.4571 (X6CrNiMoTi17-12-2), AISI 316Ti; WNr. 1.4581 (GX5CrNiMoNb19-11-2); WNr. 1.4841 (X15CrNiSi25-21, früher X15CrNiSi25-20); WNr. 1.6582 (34CrNiMo6).

Schweißverfahren zum Schweißen von anderen Werkstoffen wie beispielsweise Nickelbasiswerkstoffen unterscheiden sich fundamental von Verfahren zum Schweißen von Edelstählen. Der Fachmann auf dem Gebiet der Schweißtechnik würde daher Verfahren bzw. Schutzgase für das Schweißen von Nickelbasiswerkstoffen nicht für das Schweißen von Edelstählen einsetzen.

So verhalten sich Nickelbasiswerkstoffe beim Metall-Schutzgassschweißen aufgrund ihrer Legierungszusammensetzung unterschiedlich zu herkömmlichen Edelstählen. Im geschmolzenen Zustand sind Nickelbasiswerkstoffe wesentlich zähflüssiger, was den Werkstoffübergang besonders im Impulslichtbogen beim Metall-Schutzgassschweißen erschwert. Das führt unter anderem dazu, dass Nickelbasiswerkstoffe nicht mit denselben Parametern geschweißt werden können wie herkömmliche Edelstähle. Kennlinien, die in modernen Stromquellen beispielsweise für Edelstähle vorprogrammiert sind, können nicht für das Schweißen von Nickelbasiswerkstoffen übernommen werden. So ist beispielsweise eine Anpassung der Impulsgeometrie erforderlich. Es bedarf also entweder unterschiedlicher Kennlinien in der Stromquelle oder einer frei programmierbaren Stromquelle, um für Nickelbasiswerkstoffe die erforderliche Anpassung durchführen zu können.

Nickelbasiswerkstoffe und herkömmliche Edelstähle können ferner nicht mit denselben Prozessgasen durch Metall-Schutzgassschweißen verschweißt werden. Der wesentlich höhere Nickelanteil und zusätzliche Legierungselemente wie Aluminium oder Titan, die zur Erhöhung der Festigkeit den Nickelbasiswerkstoffen beigegeben werden, sind sehr sauerstoffaffin. Deswegen werden für das Metall-Schutzgassschweißen von Nickelbasiswerkstoffen inerte Prozessgase empfohlen, im Gegensatz zu einfachen Edelstählen oder Duplexstählen, bei denen entsprechende aktive Komponenten (z.B. Kohlendioxid oder Sauerstoff) bis zu 3% üblich sind. Wenn leicht aktive Gase für Nickelbasiswerkstoffe verwendet werden, liegt der Sauerstoff- und/oder Kohlendioxidanteil bei weniger als 0,1 %, also substantiell unterhalb der Werte, die bei herkömmlichen Edelstähle eingesetzt werden (wie erwähnt bis zu 3%). Würde man Nickelbasiswerkstoffe mit derart hoch oxidierenden Gasen verschweißen, würden Legierungselemente abgebrannt, deren Fehlen im Schweißgut und der diffusionsbeeinträchtigten Wärmeeinflusszone schwerwiegende metallurgische Nachteile mit sich bringen würde. Diese sind für den Fachmann optisch erkennbar.

Die vorliegende Erfindung beruht auf der überraschenden Erkenntnis, dass sich durch den Einsatz eines Wasserstoff und zumindest eine oxidierende Komponente enthaltenden Schutzgases mit den nachfolgend erwähnten Gehalten beim Schweißen von Edelstahl der Gehalt an schädlichen Nickeloxiden und Chrom(VI)-Verbindungen im Schweißrauch signifikant reduzieren lässt. Dieser vorteilhafte Effekt tritt bei Verwendung eines Schutzgases ein, das einen Gehalt von 0,5 bis 3,0 Volumenprozent (Vol.%), insbesondere von 1,2 bis 2,5 Vol.%, gegebenenfalls jedoch auch von 0,5 bis 1,0 Vol.%, von 1,0 bis 1,2 Vol.%, von 1,2 bis 1,4 Vol.%, von 1,4 Vol.% bis 1,6 Vol.%, von 1,6 bis 1,8 Vol.%, von 1,8 bis 2,0 Vol.%, von 2,0 Vol.% bis 2,5 Vol.% oder von 2,5 bis 3,0 Vol.% der wenigstens einen oxidierenden Komponente und von 0,1 bis 2,9 Vol.%, insbesondere von 0,5 bis 2,5 Vol.%, gegebenenfalls jedoch auch von 0,1 bis 0,5 Vol.%, von 0,5 bis 1,0 Vol.%, von 1,0 bis 1,2 Vol.%, von 1,2 bis 1,4 Vol.%, von 1,4 bis 1,6 Vol.%, von 1,6 bis 1,8 Vol.%, von 1,8 bis 2,0 Vol.%, von 2,0 bis 2,5 Vol.% oder von 2,5 bis 2,9 Vol.% Wasserstoff enthält. Dieses Schutzgas wird mittels des Schweißbrenners dem Schweißbereich zugeführt.

Unter einer "oxidierenden Komponente" wird im Rahmen dieser Anmeldung eine Komponente verstanden, die eine oxidierende Wirkung auf die geschweißten Werkstoffe ausübt. Der Begriff wird dabei im Sinne der EN ISO 14175 gebraucht. Oxidierende Komponenten sind insbesondere Sauerstoff und Kohlendioxid. Oxidierende Komponenten besitzen bekanntermaßen einen positiven Einfluss auf die Prozessstabilität beim Schweißen, insbesondere durch eine Erhöhung der Lichtbogenstabilität. Ein im Rahmen der vorliegenden Erfindung eingesetztes Gasgemisch kann auch zwei oder mehr oxidierende Komponenten enthalten, beispielsweise Sauerstoff und Kohlendioxid. Die Angabe eines Gehalts "der wenigstens einen oxidierenden Komponente" bezieht sich in einem solchen Fall auf den Gesamtgehalt, der sich aus den Einzelgehalten zusammensetzt.

Erfindungsgemäß wird zusätzlich zu einer oder mehreren oxidierenden Komponenten eine reduzierende Komponente in Form von Wasserstoff eingesetzt. Wie sich überraschend herausgestellt hat, weist insbesondere eine solche Kombination mit den oben angegebenen Gehalten eine deutlich reduzierende Wirkung auf den Gehalt von Chrom(VI)-Verbindungen im Schweißrauch auf. Dies ist nach derzeitigem Kenntnisstand darauf zurückzuführen, dass sich hierbei mindestens zwei physikalischchemische Einflüsse addieren:
Auf der einen Seite wird der Anteil an Oxidationskomponenten auf ein Optimum begrenzt, damit der Prozess zwar noch stabil abläuft, aber so wenig wie möglich Sauerstoff zur Verfügung gestellt wird, und somit auch die Menge an entstehenden Chromoxiden eingeschränkt wird. Ein stabiler Prozess ist zwingend erforderlich, da bei instabilen Prozessen durch Turbulenzen Umgebungsluft in den Lichtbogenbereich eingetragen wird und alle chemischen Reaktionen unkontrollierbar werden bzw. die Emissionsraten aufgrund des Luftsauerstoffs zunehmen.

Zusätzlich stellt der Lichtbogen aber genügend Energie zur Verfügung (thermisch, elektrisch), um die Wasserstoffanteile zu dissoziieren. Atomar zur Verfügung gestellter Wasserstoff reagiert aber sofort unter Bildung von Sauerstoff und Wasser mit Ozon:

O₃ + 2H⁺ + 2e⁻ → O₂ + H₂O

Da der atomare Wasserstoff also einen Teil des generierten Ozons zersetzt, stehen viel weniger Ozonmoleküle zur Verfügung, um die unten angegebenen Reaktionen (ii), (iii) und (v) zu erlauben. Durch die Addition der beiden aufeinander abgestimmten Effekte - Begrenzung der Oxidationskomponente und Verwendung von Wasserstoff-wird also bereits die Entstehung von Chromverbindungen begrenzt. Dadurch reduzieren sich die Emissionen.

Dieser Effekt tritt in geringerem Umfang auf, wenn insbesondere andere als die genannten Gehalte der wenigstens einen oxidierenden Komponente verwendet werden. In diesem Fall wird entweder der Schweißprozess instabiler oder der Schweißprozess wird zwar stabilisiert, aber durch die erhöhte Oxidationskraft des Gasgemischs erfolgt eine erhöhte Bildung an Oxiden. In beiden Fällen würde die Wirkung des reduzierenden Wasserstoffs nicht mehr ausreichen. Aus technischen Gründen, insbesondere seiner Brennbarkeit, kann der Wasserstoffgehalt nicht beliebig erhöht werden.

Unter "Chrom(VI)-Verbindungen" werden im Rahmen dieser Anmeldung sämtliche Verbindungen sechswertigen Chroms verstanden, darunter die erwähnten Chromate Natriumchromat (Na₂CrO₄), Kaliumchromat (K₂CrO₄) und Calciumchromat (CaCrO₄) sowie Chromtrioxid. Nickeloxide umfassen Nickelmonoxid (NiO), Nickeldioxid (NiO₂) und Dinickeltrioxid (Ni₂O₃), also Sauerstoffverbindungen von zwei-, drei- und vierwertigem Nickel.

Es hat sich herausgestellt, dass sich Chrom(VI)-Verbindungen im Schweißrauch bevorzugt aus Chrom(III)-Verbindungen, insbesondere Chrom(III)-Oxid (Cr₂O₃), in Anwesenheit von Ozon bilden. Chrom(VI)-Verbindungen können jedoch auch direkt aus Chrom mit Sauerstoff gebildet werden. Das besonders kritische Ozon entsteht aus Sauerstoff unter Einwirkung der ultravioletten Strahlung des Lichtbogens.

Typische Reaktionen, die im Rahmen der vorliegenden Erfindung von Interesse sind, sind in den nachfolgenden Reaktionsgleichungen zusammengefasst:

2 Cr⁰ + 3 O₂ → 2 Cr⁶⁺O₃ (i)

Cr⁰ + O₃ → Cr⁶⁺O₃ (ii)

Cr³⁺₂O₃ + O₃ → 2 Cr⁶⁺O₃ (iii)

Cr³⁺₂O₃ + 3/2 O₂ → 2 Cr⁶⁺O₃ (iv)

Cr³⁺₂O₃ + O₃ → 2 Cr⁶⁺O₃ (v)

Die Wirkung des erfindungsgemäß verwendeten Schutzgases beruht unter anderem darauf, dass durch die vergleichsweise geringe Menge der wenigstens einen oxidierenden Komponente das Sauerstoffangebot reduziert wird. Hierdurch bilden sich deutlich geringere Mengen an Chrom(III)-Verbindungen, insbesondere Chrom(III)-Oxid, die zu Chrom(VI)-Verbindungen weiterreagieren könnten. Ferner wird bereits hierdurch die Bildung von Ozon beträchtlich reduziert, wie erwähnt.

Kohlendioxid dissoziiert im Lichtbogen bekanntermaßen zu (vergleichsweise stabilem) Kohlenmonoxid und atomarem Sauerstoff. Das Kohlenmonoxid kann weiter zu atomarem Kohlenstoff und atomarem Sauerstoff dissoziieren. Durch die Bildung von Kohlenstoff und dessen Eintrag in den Schweißbereich kann es zum sogenannten Aufkohlen der Schweißnaht kommen. Verlassen die Dissoziationsprodukte des Kohlendioxids den unmittelbaren Bereich des Lichtbogens und erreichen damit eine Region mit geringerer Temperatur, können sich insbesondere Kohlenmonoxid und atomarer Sauerstoff zu Kohlendioxid rekombinieren. Es entsteht kein oder weniger molekularer Sauerstoff, der für die Oxidation von Chrom bzw. Nickel zur Verfügung stünde. Atomarer Kohlenstoff kann ferner mit Ozon reagieren, wodurch molekularer Sauerstoff und Kohlendioxid gebildet werden. Das Ozonangebot reduziert sich hierdurch weiter:

CO₂ → CO + O (vi)

CO → C + O (vii)

C + 2 O₃ → CO₂ + 2 O₂ (vi)

Die genannten Effekte werden durch den Einsatz von Wasserstoff verstärkt. Wasserstoff wirkt im Schutzgas reduzierend und verhindert damit eine Weiteroxidation von Chrom(III)-Verbindungen zu Chrom(VI)-Verbindungen bzw. bereits zuvor eine Oxidation von metallischem Chrom zu entsprechenden Oxidationsprodukten, beispielsweise zwei-, drei- und vierwertigen Chromoxiden (CrO, Cr₂O₃, CrO₂). Ein entsprechender oxidationsverhindernder Effekt ergibt sich bei der Verwendung des erfindungsgemäßen Schutzgases auch bezüglich der Reduktion von Nickeloxiden. Atomarer Wasserstoff besitzt ferner unter den vorliegenden Bedingungen eine hohe Affinität zu Ozon, wie erwähnt, und ist daher in der Lage, Ozon abzufangen, wodurch sich die oben bezüglich Kohlendioxid erläuterten Vorteile ergeben.

Die Zugabe von Kohlendioxid oder einer anderen oxidierenden Komponente und Wasserstoff zu einem entsprechenden Schutzgas bewirkt damit einen synergistischen Effekt bei der Reduktion der genannten schädlichen Verbindungen.

Im verbleibenden Anteil, also dem Anteil des Schutzgases, der nicht aus Kohlendioxid und/oder wenigstens einer anderen oxidierenden Komponente und Wasserstoff gebildet wird, enthält ein derartiges Schutzgas Argon oder eine Mischung aus Argon und wenigstens einem weiteren Gas, beispielsweise Helium. Der Argonanteil dieses verbleibenden Anteils kann beispielsweise 100, 90, 80, 70, 60, 50, 40, 30, 20 oder 10 Volumenprozent betragen. Der Rest des verbleibenden Anteils kann aus Helium bestehen.

Die vorliegende Erfindung eignet sich in besonderer Weise für chrom- und nickellegierte Edelstähle (sogenannte Chromnickelstähle), insbesondere für sogenannte hochlegierte Stähle. Von "hochlegierten" Stählen spricht der Fachmann bei einem Massenanteil eines Legierungsbestandteils von über 5%.

Ein wesentlicher Vorteil der vorliegenden Erfindung ergibt sich bei Schweißverfahren, bei denen chromhaltige Schweißzusatzwerkstoffe zum Einsatz kommen, beispielsweise als drahtförmige Schweißzusatzwerkstoffe bzw. abschmelzende Elektroden in den verwendeten Verfahren. Wie erwähnt, kommt es hier durch die Wirkung des Lichtbogens, in dem der Schweißzusatzwerkstoff direkt aufgeschmolzen und zum Teil verdampft wird, zu vermehrten Emissionen. Entsprechende Verfahren lassen sich daher auf Grundlage der vorliegenden Erfindung sicherer durchführen.

Die Schweißzusatzwerkstoffe können in einem erfindungsgemäßen Verfahren in sämtlichen Formen eingesetzt werden, die aus dem Stand der Technik bekannt sind. Bekannte Schweißzusatzwerkstoffe werden als Drähte mit Durchmessern zwischen 0,6 und 2,4 mm bereitgestellt. Entsprechende Materialien können beispielsweise Lichtbogenstabilisatoren, Schlackenbildner und Legierungselemente umfassen, die einen ruhigen Schweißprozess begünstigen, zu einem vorteilhaften Schutz der erstarrenden Schweißnaht beitragen und die mechanische Güte der erzeugten Schweißnaht positiv beeinflussen.

Die zuvor erläuterten Vorteile ergeben sich in gleicher Weise aus dem erfindungsgemäß ebenfalls beanspruchten Verfahren zur Reduktion von Nickeloxiden und/oder Chrom(VI)-Verbindungen in einem Schweißrauch eines derartigen Verfahrens. Das erfindungsgemäß vorgeschlagene, Wasserstoff und wenigstens eine oxidierende Komponente enthaltende Schutzgas für die genannten Verfahren sowie die Verwendung eines entsprechenden Schutzgases führen ebenfalls zu den genannten Vorteilen.

Ein erfindungsgemäß zusammengesetztes Schutzgas kann insbesondere als vorgemischte Schutzgasmischung bereitgestellt werden, die eine besonders einfache Durchführung des erfindungsgemäßen Schweißverfahrens ermöglicht, weil ein entsprechendes Schutzgas nicht aufwendig vor Ort gemischt werden muss. Ein entsprechendes Schutzgasgemisch kann beispielsweise in einer Druckgasflasche oder, bei größeren Schweißanlagen, in einem entsprechenden Druckgastank bereitgestellt werden. Eine zur Implementierung des erfindungsgemäßen Verfahrens verwendete Schweißanlage kann daher einfach und kostengünstig realisiert werden.

Eine besonders hohe Flexibilität wird hingegen durch ein Verfahren erzielt, das die Mischung eines entsprechenden Schutzgases vor Ort umfasst. Die Hauptkomponente eines entsprechenden Schutzgases kann dabei zur Verringerung der zu transportierenden und/oder vorzuhaltenden Volumina auch in flüssiger Form bereitgestellt werden. Beispielsweise kann ein entsprechendes Schutzgas in einem erfindungsgemäßen Verfahren aus verdampfendem Argon, Helium und/oder Wasserstoff unter Beimischung der jeweils anderen Komponenten, die in einem Druckgastank vorgehalten werden, erzeugt werden. Auch flüssig vorgemischte Komponenten können hierbei verwendet werden.

Das Schutzgas kann auch aus kommerziell erhältlichen Gasmischungen, beispielsweise aus einer Mischung mit 97,5 Vol.% Helium und 2,5 Vol.% Kohlendioxid und einer Mischung von 97 Vol.% Argon mit 3 Vol.% Wasserstoff, gemischt werden.

### Kurze Beschreibung der Zeichnung

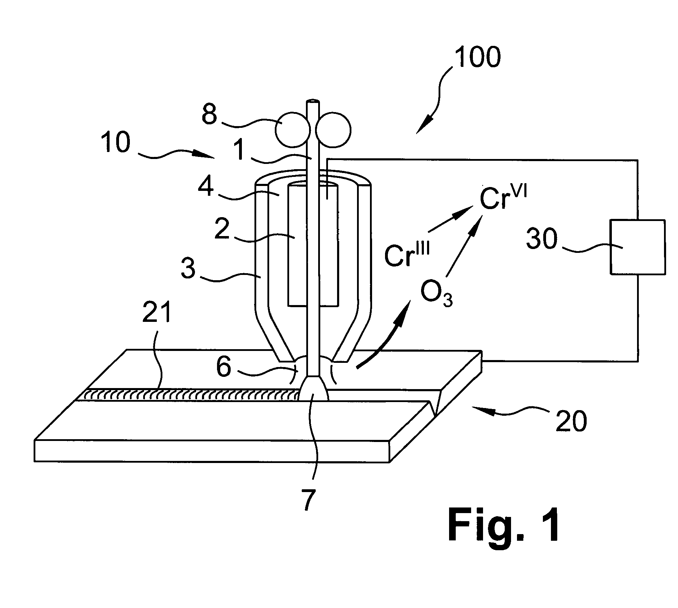

Die Erfindung wird nachfolgend unter Bezugnahme auf die beigefügte Zeichnung näher erläutert. In dieser veranschaulicht
Figur 1 die Grundlagen der Bildung von Chrom(VI)-Verbindungen anhand einer schematischen Darstellung eines Schweißbrenners.

### Ausführliche Figurenbeschreibung

Figur 1 veranschaulicht die chemischen Grundlagen der Bildung von Chrom(VI)-Verbindungen anhand einer schematischen Darstellung eines Schweißbrenners. Die Ansicht ist insgesamt mit 100 bezeichnet.

In der Ansicht 100 ist der Schweißbrenner 10 in Teilansicht im Längsschnitt dargestellt. Der Schweißbrenner 10 ist als Metallschutzgasschweißbrenner ausgebildet. Er ist dazu eingerichtet, in dem dargestellten Abschnitt einen drahtförmigen Schweißzusatzwerkstoff 1 zu führen und weist hierzu entsprechende Führungsmittel 2, beispielsweise eine Führungshülse mit einem geeigneten Innendurchmesser auf. Der Schweißbrenner 10 ist auf ein Werkstück 20 gerichtet.

Die Führungsmittel 2 sind von einer Düse 3 umgeben, die einen ringförmigen Prozessgaskanal 4 definiert, der konzentrisch um die die Führungsmittel 2 bzw. den Schweißzusatzwerkstoff 1 verläuft. Über den Prozessgaskanal 4 kann durch eine entsprechende Schutzgaseinrichtung (nicht dargestellt) ein geeignetes Schutzgas zugeführt werden, das einen Bereich 6 zwischen dem Schweißbrenner 10 und dem Werkstück 20 abdeckt.

Als Metallschutzgasschweißbrenner ist der Schweißbrenner 10 dazu ausgebildet, den Schweißzusatzwerkstoff 1 mit einem Schweißstrom zu beaufschlagen. Die Führungsmittel 2 sind hierzu über einen nur schematisch veranschaulichten Schweißstromanschluss mit einem Pol einer geeigneten Schweißstromquelle 30 verbunden. Die Schweißstromquelle 30 ist vorzugsweise zur Bereitstellung eines Gleich- und/oder Wechselstroms eingerichtet. Das Werkstück 20 ist im dargestellten Beispiel an den anderen Pol der Schweißstromquelle 30 angeschlossen, wodurch ein Lichtbogen 7 zwischen dem Schweißzusatzwerkstoff 1 und dem Werkstück 20 ausgebildet werden kann (übertragener Lichtbogen). In gleicher Weise kann jedoch auch ein anderes Element des Schweißbrenners 10 mit dem anderen Pol der Schweißstromquelle 30 verbunden werden, so dass sich zwischen Schweißzusatzwerkstoff 1 und diesem anderen Element des Schweißbrenners 10 ein Lichtbogen ausbildet (nicht übertragener Lichtbogen).

Durch eine schematisch veranschaulichte Vorschubeinrichtung 8 kann der Schweißzusatzwerkstoff 1 an die Führungsmittel 2 bereitgestellt und in einer geeigneten Geschwindigkeit gefördert werden. Durch einen Vorschub des Werkstücks 20 gegenüber dem Schweißbrenner 10 oder umgekehrt kommt es zur Ausbildung einer sukzessive erstarrenden Schweißnaht 21.

Die dargestellte Anordnung kann auch von weiteren Düsen umgeben sein, die zur Zuführung zusätzlicher Prozessgase verwendet werden können. Über einen weiteren ringförmigen Prozessgaskanal kann beispielsweise ein Plasmagas und über einen anderen ringförmigen Prozessgaskanal ein Fokussiergas zugeführt werden, so dass sich mittels des Schweißbrenners 10 auch ein Plasmaverfahren realisieren lässt.

Durch einen entsprechenden Pfeil ist die Freisetzung von Chrom(III)-Verbindungen (mit CR^{III} zusammengefasst) aus dem Schweißbereich, d.h. dem Bereich des Lichtbogens 7, veranschaulicht. Durch eine Reaktion mit ebenfalls gebildetem Ozon (O₃) kommt es zur Weiteroxidation zu Chrom(VI)-Verbindungen (mit CR^{VI} zusammengefasst).

## Patentansprüche

1. Verfahren zum Metall-Schutzgasschweißen, bei dem ein Schweißzusatzwerkstoff (1) einem Schweißbrenner (10) zugeführt und über einen Schweißstromanschluss (5) mit einem Schweißstrom einer Schweißstromquelle (30) beaufschlagt wird, wodurch ein Lichtbogen (7) ausgebildet und Material des Schweißzusatzwerkstoffs (1) in einem Schweißbereich auf ein zumindest in dem Schweißbereich aus einem legierten Edelstahl bestehendes Werkstück (20) übertragen wird, **dadurch gekennzeichnet, dass** mittels des Schweißbrenners (10) dem Schweißbereich ein Schutzgas zugeführt wird, das einen Gehalt von 0,5 bis 3,0 Volumenprozent wenigstens einer oxidierenden Komponente und einen Gehalt von 0,1 bis 2,9 Volumenprozent Wasserstoff aufweist.

2. Schweißverfahren nach Anspruch 1, bei dem das Schutzgas einen Gehalt von 1,2 bis 2,5 Volumenprozent der wenigstens einen oxidierenden Komponente aufweist.

3. Schweißverfahren nach Anspruch 1 oder 2, bei dem das Schutzgas einen Gehalt von 0,5 bis 2,5 Volumenprozent Wasserstoff aufweist.

4. Schweißverfahren nach einem der vorstehenden Ansprüche, bei dem das Schutzgas im verbleibenden Anteil Argon und/oder Helium enthält.

5. Schweißverfahren nach einem der vorstehenden Ansprüche, bei dem ein Schweißzusatzwerkstoff (1) aus einem hochlegierten nickel- und/oder chromhaltigen Eisenwerkstoff verwendet wird.

6. Schweißverfahren nach einem der vorstehenden Ansprüche, bei dem ein Werkstück (20) aus einem hochlegierten nickel- und/oder chromhaltigen Eisenwerkstoff verwendet wird.

7. Schweißverfahren nach einem der vorstehenden Ansprüche, bei dem das Schutzgas aus wenigstens zwei Schutzgaskomponenten gemischt wird.

8. Schweißverfahren nach einem der vorstehenden Ansprüche, bei dem das Schutzgas in vorgemischter Form bereitgestellt wird.

9. Verfahren zur Reduktion eines Gehalts an Nickeloxiden und/oder Chrom(VI)-Verbindungen in einem Schweißrauch eines Verfahrens zum Metall-Schutzgasschweißen, bei dem ein Schweißzusatzwerkstoff (1) einem Schweißbrenner (10) zugeführt und über einen Schweißstromanschluss (5) mit einem Schweißstrom einer Schweißstromquelle (30) beaufschlagt wird, wodurch ein Lichtbogen (7) ausgebildet und Material des Schweißzusatzwerkstoffs (1) in einem Schweißbereich auf ein zumindest in dem Schweißbereich aus einem legierten Edelstahl bestehendes Werkstück (20) übertragen wird, **dadurch gekennzeichnet, dass** mittels des Schweißbrenners (10) dem Schweißbereich ein Schutzgas zugeführt wird, das einen Gehalt von 0,5 bis 3,0 Volumenprozent wenigstens einer oxidierenden Komponente und einen Gehalt von 0,1 bis 2,9 Volumenprozent Wasserstoff aufweist.

10. Schutzgas zur Verwendung in einem Verfahren nach einem der vorstehenden Ansprüche, das einen Gehalt von 0,5 bis 3,0 Volumenprozent wenigstens einer oxidierenden Komponente und einen Gehalt von 0,1 bis 2,9 Volumenprozent Wasserstoff aufweist.

11. Verwendung eines Gasgemischs, das einen Gehalt von 0,5 bis 3,0 Volumenprozent wenigstens einer oxidierenden Komponente und einen Gehalt von 0,1 bis 2,9 Volumenprozent Wasserstoff aufweist, als Schutzgas in einem Schweißverfahren nach Anspruch 1 und/oder als Schutzgas in einem Verfahren nach Anspruch 9.
